# EUROPEAN PATENT SPECIFICATION

(11) **EP 1 826 056 B1**
(45) Date of publication and mention of the grant of the patent: **02.11.2011**
(21) Application number: 06003851.0
(22) Date of filing: 24.02.2006
(51) Int. Cl.: B60K 37/06, G05G 1/01, G05G 1/08, G05G 9/047, G05G 1/02

(54) **Multifunction input device**
Multifunktionseingabegerät
Dispositif d'entrée multifonction

(43) Date of publication of application: 29.08.2007
(60) Divisional application: 10013018.6
(73) Proprietor: Harman Becker Automotive Systems GmbH, 76307 Karlsbad (DE)
(72) Inventor: Peissner, Maria, 80804 München (DE); Metternich-Heider, Barbara, 70794 Filderstadt (DE); Roessger, Peter, Dr., 72631 Aichtal (DE); Preissner, Olaf, 73230 Kirchheim unter Teck (DE); Fritz, Sandra, 70794 Filderstadt (DE); Johannsen, Ulrike, 70565 Stuttgart (DE)
(74) Representative: Grünecker, Kinkeldey, Stockmair & Schwanhäusser

(56) References cited:
- EP-A- 1 343 113
- EP-A- 1 369 768
- WO-A-2005/024540
- DE-A1- 10 012 753
- DE-A1- 10 346 112
- DE-A1-102004 006 605
- DE-A1-102004 007 293
- US-A1- 2004 132 498
- US-B1- 6 429 542

## Description

The present invention relates to a multifunction input device for operating a plurality of systems of a power driven vehicle, the input device having the features of the preamble of claim 1.

A generic multifunction input device is known from EP 0 893 750 B1. The input device comprises a knob which is rotatable about its axis, pivotable and axially movable.

Such input devices are offered in lots of cars. However, it appears that this input device does not in any case accommodate with the driver's wishes as to handling

From EP 1 343 113 A1, an input device with a bridge-like main part is known. Below the bridge-like main part a rotatable jog dial is provided for selecting functions. The bridge-like main part serves as a hand rest from which a resting hand can operate the jog dial.

DE 100 12 753 A1 relates to an input device having the shape of a car model. The roof of the car model serves as a hand rest and at the front end of the car model, a barrel-shaped rotation element and a switch element are provided.

From US 2004/0132498 A1, a multifunction input device is known, which comprises a unit of a rotatable operator ring and a touch pad surrounded by the operator ring. This unit is movable with respect to a base upon which the unit is provided. The base comprises a depression for a hand, which is some distance from said unit. The operator ring can be provided rotatable with respect to the touch pad.

DE 10 2004 007 293 A1, DE 10 2004 006 605 A1, WO 2005/024540 A, DE 103 46 112 A1, EP 1 369 768 A2 and US 6,429,542 B1 relate to multifunction input devices comprising at least one selection unit.

It is the object of the present invention to provide a multifunction input device which can be simply constructed and can be operated easily although it allows a good selection function within a plurality of systems of a power driven vehicle.

According to the present invention, the object is solved by a multifunction input device having the features of independent claim 1.

Surprisingly, the inventive input device can be operated easily and precisely although its multipart structure provides touch surfaces being accessible for the driver and being movable relative to each other. The driver can stay concentrated on the traffic while making his selection within the plurality of system functions of the vehicle. Nevertheless, the arrangement of the main part and the relatively hereto rotatable rotational element can be realised in a simple construction. The hand rest allows comfortable operation of the rotation element. Further it disburdens the driver's attention for operating the input device. If the driver's hand has found its place on the input device it is no longer necessary that the driver controls the position of his hand. The general dome-like shape of the touch surface of the main part provides for a good orientation of a driver's hand on the input device. As the main part comprises the at least one button, the space on the main part can be used efficiently, i.e. a compact arrangement of input elements of the input device can be achieved, and the button can be easily found.

As the rotation element is rotatable around the main part it can be used functionally and/or as an orientation for the operator. A compact structure of the selection unit as a whole is provided.

Particularly preferable, the rotation element may be movable with respect to the main part in a press button-like manner. This provides for a further possibility of input in addition to the selection due to the rotative position of the rotation element. That is, the rotation element has an integrated functionality.

Favourably, the rotation element may have a ring-like shape. Such shape provides for a comfortable touch surface for operating the rotation element while also a good integrity of the rotation element and the main is possible.

Preferably, the rotation element may be arranged at or near a margin of the main part. In this position the rotation element can be easily operated with a finger tip.

Particularly preferable, the main part and the rotation element may be movable together with respect to a basis carrying the selection unit. Hereby, further selection can be made in addition to the selection according to the rotative position of the rotation element.

Advantageously, the main part and the rotation element may together be transversely shiftable with respect to the basis. This allows an operation movement which can be easily distinguished by an operator from the rotative selection movement of the rotation element.

Preferably, the touch surface of the main part may have a spherical calotte-like shape.

Particularly advantageous, the touch surface of the rotation element may have a shape generally setting forth the shape of the touch surface of the main part. Hereby, the main part and the rotation element together have a generally dome-like, preferably calotte-like shape providing for a good orientation of a driver's hand on the input device.

Particularly favourable, the rotational axis of the rotation element may be generally identical or parallel to a middle axis of an outside shape of the main part. Thereby, the outside shape of the main part supports a good operability of the rotation element especially when the hand of the operator is rotated for rotating the rotation element or rests on the main part and the fingers carry out a circumferential movement to rotate the rotation element.

Embodiments of the invention are shown in the drawing and are described below. In the drawing, the following is shown:
- Fig. 1: is a top view of an inventive input device of a first embodiment,
- Fig. 2: is a side view of the input device of Fig. 1,
- Fig. 3: depicts schematically the functions of the input device as shown in Figs 1 and 2,
- Fig. 4: is a top view of an inventive input device according to a second embodiment,
- Fig. 5: is a side of the input device as shown in Fig. 4,

In the present description the same reference signs are used for analogue parts in the different embodiments.

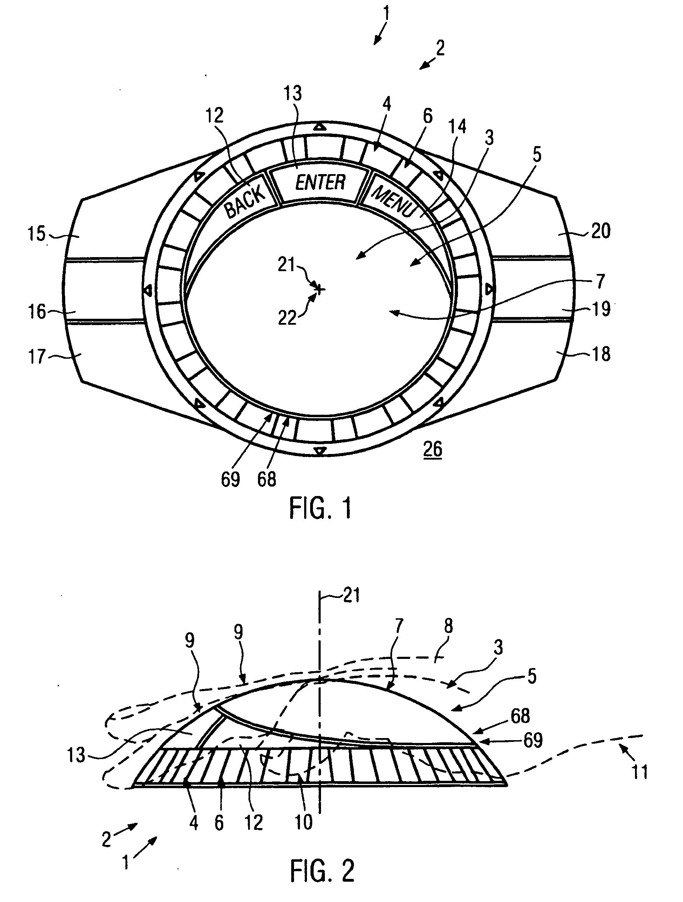

Fig. 1 shows an inventive multifunction input device 1 of a first embodiment in a top view. The input device 1 serves to operate a plurality of systems of a not shown power driven vehicle. The plurality of systems may comprise for instance an air-conditioning system, a navigation system, a board computer, a communication system, e.g. a mobile telephone system, an entertainment system, e.g. an audio system, and so on.

The input device 1 comprises a selection unit 2 by means of which the driver can make a selection within the options and functions of the plurality of systems. The selection unit 2 comprises a main part 3 and a rotation element 4 being rotatable relative to the main part 3. Each of the main part 3 and the rotation element 4 comprises a touch surface 5, 6 being accessible during use of the input device 1. That is, the touch surface 6 of the rotation element 4 is rotatable relative to the touch surface 5 of the main part 3. This mans that the inventive input device has a multipart structure accessible to the user.

The main part 3 comprises a hand rest 7 on which a hand 8 may rest while operating the input device as shown in Fig. 2. This provides for a comfortable use of the input device as the fingers 9,10 and the associated arm 11 are disburdened from carrying the weight of the hand and arm. This makes it possible to operate the input device in a relaxed manner.

The whole main part may serve as a hand rest, i.e. the whole touch surface of the hand rest might be the whole touch surface of the main part. However, it is possible that the main part 3 comprises at least one further part, e.g. at least one button. In the first embodiment of the invention the main part 3 comprises three buttons 12, 13, 14 which are arranged adjacent to the hand rest 7, namely between the hand rest 7 and the rotation element 4. It is also possible to arrange one or more buttons in a manner surrounded by a part of the hand rest 7.

At least one button may be arranged in an area of the main part 3 in which at least one finger 9, 10 of the hand 8 is positioned when the input device 1 is operated. In the first embodiment all buttons 12, 13, 14 are arranged in an area which can be covered by fingers 9, 10. Hereby, the buttons can be operated easily wherein only a slight movement of the associated finger 9, 10 is necessary.

In the first embodiment of the invention the rotation element 4 has a ring-like shape. The touch surface 6 of the rotation element 4 is arranged surrounding the touch surface 5 of the main part 3. The main part 3 serves as a centre part around which the rotation element 4 is rotatable.

The input device may comprise at least one further button which is arranged near the selection unit. In the first embodiment six additional buttons 15-20 are provided partially surrounding the rotation element as shown in Fig. 1.

The touch surface 5 of the main part 3 may have a general dome-like outer shape. In the first embodiment as shown in Fig. 2 it has a spherical calotte-like shape. The touch surface 6 of the rotation element 4 has an outside shape generally setting forth the shape of the touch surface 5 of the main part 3. That is, the main part 3 and the rotation element 4 have together a generally dome-like outer shape which is, in the first embodiment, a spherical calotte-like outer shape.

The outside shape of the main part 3 has a middle axis 21 and the rotation element 4 has a rotation axis 22. In the first embodiment the middle axis 21 and the rotation axis 22 are coincident with each other. It is also possible to provide them parallel to each other.

By the provision of the generally dome-like outside shape of the main part is hand is well supported by the main part, especially as the dome-like outside shape corresponds to the hand hole as well as to a relaxed attitude of the hand.

By the dome-like outside shape and the parallel or coincident of the axis 21, 22 the hand is well guided when it is rotated relative to the main part when the rotation element is rotated.

It is possible to provide the main part with a substantially flatter outside shape than shown in Fig. 2.

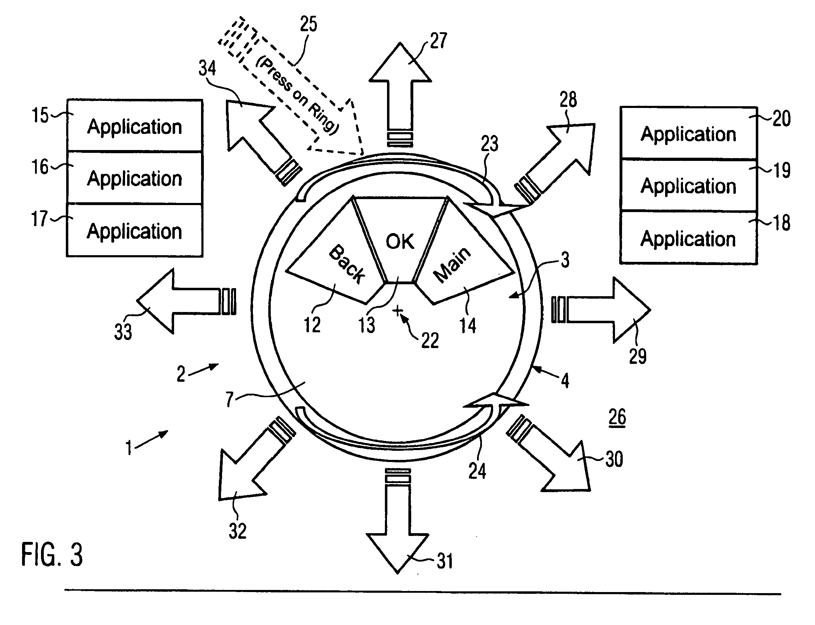

The functionality of the input device schematically illustrated in Fig. 3. The rotation element 4 is bidirectionally rotatable as indicated by the arrows 23 and 24, preferably the rotation element 3 can be continuously rotated by 360° or more.

The rotation element 4 can be provided movable with respect to the main part 3 in a press button-like manner as indicated by the arrow 25 with dashed lines. This provides an input functionality in addition to the selection made via the rotation of the rotation element 4. It is possible to use the press button-like movability of the rotation element 4 as a "okay" function. However, it is also possible that - if provided - one the buttons 12-20 is used for the "okay" function, preferably, one of the buttons 12-14 of the main part 3. Advantageously, the central one 13 of these buttons is used therefor.

The press button-like movement can be a transverse shift movement, e.g. traverse to or along the rotational axis 22 of the rotation element, and/or a pivoting movement around an axis different to said rotational axis 22.

The main part 3 and the rotation element 4 might be movable together with respect to a basis 26 carrying the selection unit 2. The additional movement is possible in at least one direction. In the first embodiment the main part and the rotation element are movable together in eight directions as indicated by arrows 27-34 in Fig. 3. By a movement in the respective direction a selection is made.

In the first embodiment the main part and the rotation element are together movable transversely shiftable with respect to the basis 26.

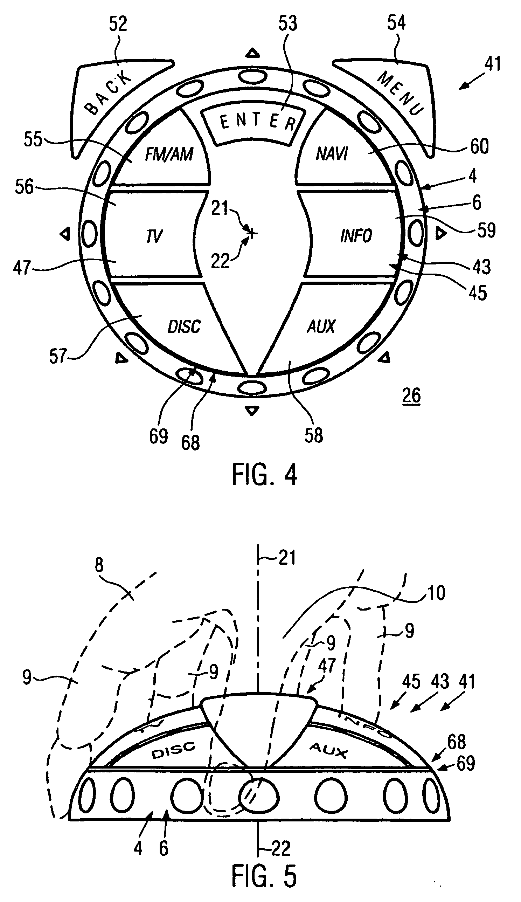

In Fig. 4 and 5 a multifunction input device 41 according to a second embodiment of the invention is shown. The differences of this input device 41 to the input device according to the first embodiment are described below.

The input device 41 has a main part 43 with a stepped touched surface 45. A hand rest 47 of the main part 43 projects outwardly from the remaining outside surface of the main part as shown in Fig. 5.

The main part 43 comprises a plurality of buttons 53, 55, 56, 57, 58, 59, 60. One 53 of them is surrounded by the hand rest 47 as shown in Fig. 4. The remaining buttons 55, 56, 57, 58, 59, 60 are arranged adjacent to the hand rest, namely between the hand rest 47 and the rotation element 4. The buttons are arranged symmetrically wherein three buttons 55, 56, 57 are arranged on one side of the hand rest 47 and the further three buttons 58, 59, 50 are arranged on the other side of the hand rest 47. This arrangement provides a grouping of the buttons.

By providing the button 53 surrounded by the hand rest 47 the button is prevent from being pressed accidentally. Therefore, it can be used for a special function, e.g. a function used in connection with the selection made with the other selection elements. Such a special function can be the "okay" function.

Outside the ring-like rotation element 4 the input device 41 comprises two additional buttons 62 and 54.

As shown in Fig. 5, it is possible to operate the input device with the hand hole being distanced to the hand rest 47. This is also valid for the other embodiments.

## Claims

1. Multifunction input device (1, 41) for operating a plurality of systems of a power driven vehicle, the input device comprising a selection unit (2) with a rotation element (4) having a touch surface (6) being accessible during use of the input device, wherein the rotation of the rotation element is suitable for an operation selection, the selection unit comprising a main part (3, 43) having a touch surface (5, 45), wherein the touch surface of the main part is accessible during use of the input device and has a general dome-like shape, the rotation element (4, 64, 64') being rotatable with respect to the main part, and the generally dome-like shaped main part (3, 43) comprising a hand rest (7, 47) and at least one button (12, 13, 14, 53, 55, 56, 57, 58, 59, 60), the rotation element (4) being rotatable around the main part (3, 43),
**characterised in that**
the complete touch surface (6) of the rotation element (4) extends 360° around its rotational axis and is not covered, so that all parts of the touch surface of the rotation element are accessible for the user over said extension range of 360° at the same time.

2. Input device according to claim 1, **characterised in that** the rotation element (4) is movable with respect to the main part (3, 43) in a press button-like manner.

3. Input device according to claim 1 or 2, **characterised in that** the rotation element has a ring-like shape.

4. Input device according to at least one of the preceding claims, **characterised in that** the rotation element is arranged at or near a margin (68) of the main part.

5. Input device according to at least one of the preceding claims, **characterised in that** the main part (3, 43) and the rotation element (4) are together movable with respect to a basis (26) carrying the selection unit (2).

6. Input device according to claim 5, **characterised in that** the main part (3, 43) and the rotation element (4) are together transversely shiftable with respect to the basis (26).

7. Input device according to at least one of the preceding claims, **characterised in that** the touch surface (5, 45) of the main part (3, 43) has a spherical calotte-like shape.

8. Input device according to one of the preceding claims, **characterised in that** the touch surface (6) of the rotation element (4) has a shape generally setting forth the shape of the touch surface of the main part.

9. Input device according to at least one of the preceding claims, **characterised in that** the rotational axis (22) of the rotation element (4) is generally identical or parallel to a middle axis (21) of an outside shape of the main part (3).

## Patentansprüche

1. Multifunktionseingabevorrichtung (1, 41) zum Bedienen einer Mehrzahl von Systemen eines motorbetriebenen Fahrzeuges, wobei die Eingabevorrichtung eine Auswahleinheit (2) mit einem Drehelement (4) umfasst, das eine Berühroberfläche (6) aufweist, die während der Verwendung der Eingabevorrichtung zugänglich ist, wobei die Drehung des Drehelementes für eine Bedienauswahl geeignet ist, wobei die Auswahleinheit einen Hauptteil (3, 43) mit einer Berühroberfläche (5, 45) umfasst, wobei die Berühroberfläche des Hauptteiles während der Verwendung der Eingabevorrichtung zugänglich ist und eine im Allgemeinen kuppelartige Form aufweist, wobei das Drehelement (4, 64, 64') in Bezug auf den Hauptteil drehbar ist und der im Allgemeinen kuppelartig geformte Hauptteil (3, 43) eine Handstütze (7, 47) und wenigstens eine Taste (12, 13, 14, 53, 55, 56, 57, 58, 59, 60) umfasst, wobei das Drehelement (4) um den Hauptteil (3, 43) drehbar ist,
**dadurch gekennzeichnet, dass**
sich die vollständige Berühroberfläche (6) des Drehelementes (4) 360° um die Drehachse hiervon erstreckt und nicht abgedeckt ist, sodass alle Teile der Berühroberfläche des Drehelementes für den Anwender über den Erstreckungsbereich von 360° gleichzeitig zugänglich sind.

2. Eingabevorrichtung nach Anspruch 1, **dadurch gekennzeichnet, dass** das Drehelement (4) in Bezug auf den Hauptteil (3, 43) auf drucktastenartige Weise beweglich ist.

3. Eingabevorrichtung nach Anspruch 1 oder 2, **dadurch gekennzeichnet, dass** das Drehelement eine ringartige Form aufweist.

4. Eingabevorrichtung nach wenigstens einem der vorhergehenden Ansprüche, **dadurch gekennzeichnet, dass** das Drehelement an einem Rand (68) des Hauptteiles oder in der Nähe hiervon angeordnet ist.

5. Eingabevorrichtung nach wenigstens einem der vorhergehenden Ansprüche, **dadurch gekennzeichnet, dass** der Hauptteil (3, 43) und das Drehelement (4) zusammen in Bezug auf eine die Auswahleinheit (2) tragende Basis (26) beweglich sind.

6. Eingabevorrichtung nach Anspruch 5, **dadurch gekennzeichnet, dass** der Hauptteil (3, 43) und das Drehelement (4) zusammen in Bezug auf die Basis (26) quer verschiebbar sind.

7. Eingabevorrichtung nach wenigstens einem der vorhergehenden Ansprüche, **dadurch gekennzeichnet, dass** die Berühroberfläche (5, 45) des Hauptteiles (3, 43) eine sphärische kalottenartige Form aufweist.

8. Eingabevorrichtung nach einem der vorhergehenden Ansprüche, **dadurch gekennzeichnet, dass** die Berühroberfläche (6) des Drehelementes (4) eine Form aufweist, die im Allgemeinen die Form der Berühroberfläche des Hauptteiles fortsetzt.

9. Eingabevorrichtung nach wenigstens einem der vorhergehenden Ansprüche, **dadurch gekennzeichnet, dass** die Drehachse (22) des Drehelementes (4) im Allgemeinen identisch oder parallel zu einer Mittelachse (21) einer Außenform des Hauptteiles (3) ist.

## Revendications

1. Dispositif d'entrée multifunction (1, 41) pour faire fonctionner une pluralité de systèmes d'un véhicule motorisé, le dispositif d'entrée comprenant une unité de sélection (2) avec un élément de rotation (4) comportant une surface tactile (6) accessible pendant l'utilisation du dispositif d'entrée, dans lequel la rotation de l'élément de rotation est appropriée à la sélection d'une opération, l'unité de fonctionnement comprenant une partie principale (3, 43) ayant une surface tactile (5, 45), dans lequel la surface tactile de la partie principale est accessible pendant l'utilisation du dispositif d'entrée et a une forme générale de dôme, l'élément de rotation (4, 64, 64') pouvant tourner par rapport à la partie principale et la partie principale en forme générale de dôme (3, 43) comprenant un repose-main (7, 47) et au moins un bouton (12, 13, 14, 53, 55, 56, 57, 58, 59, 60), l'élément de rotation (4) pouvant tourner autour de la partie principale (3, 43),
**caractérisé en ce que**
la surface tactile complète (6) de l'élément de rotation (4) s'étend sur 360° autour de son axe de rotation et n'est pas couverte, de telle sorte que toutes les parties de la surface tactile de l'élément de rotation sont accessibles en même temps à l'utilisateur sur ladite plage d'extension de 360°.

2. Dispositif d'entrée selon la revendication 1, **caractérisé en ce que** l'élément de rotation (4) est mobile par rapport à la partie principale (3, 43) à la manière d'un bouton-poussoir.

3. Dispositif d'entrée selon la revendication 1 ou 2, **caractérisé en ce que** l'élément de rotation a la forme d'un anneau.

4. Dispositif d'entrée selon au moins d'une des revendications précédentes, **caractérisé en ce que** l'élément de rotation est agencé sur ou près d'un bord (68) de la partie principale.

5. Dispositif d'entrée selon au moins d'une des revendications précédentes, **caractérisé en ce que** la partie principale (3, 43) et l'élément de rotation (4) sont tous deux mobiles par rapport à une base (26) portant l'unité de sélection (2).

6. Dispositif d'entrée selon la revendication 5, **caractérisé en ce que** la partie principale (3, 43) et l'élément de rotation (4) peuvent tous deux être décalés transversalement par rapport à la base (26).

7. Dispositif d'entrée selon au moins d'une des revendications précédentes, **caractérisé en ce que** la surface tactile (5, 45) de la partie principale (3, 43) a la forme d'une calotte sphérique.

8. Dispositif d'entrée selon d'une des revendications précédentes, **caractérisé en ce que** la surface tactile (6) de l'élément de rotation (4) a une forme présentant généralement la forme de la surface tactile de la partie principale.

9. Dispositif d'entrée selon au moins d'une des revendications précédentes, **caractérisé en ce que** l'axe de rotation (22) de l'élément de rotation (4) est généralement identique ou parallèle à l'axe médian (21) de la forme extérieure de la partie principale (3).
